(19) **Europäisches Patentamt**

**European Patent Office**

**Office européen des brevets**

(11) **EP 1 589 652 A1**

(12) **EUROPÄISCHE PATENTANMELDUNG**

(43) Veröffentlichungstag:
26.10.2005 Patentblatt 2005/43

(51) Int Cl.⁷: **H02P 6/08**, H02P 6/16, H02P 6/18

(21) Anmeldenummer: 05007611.6

(22) Anmeldetag: 07.04.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **20.04.2004 DE 102004019004**

(71) Anmelder: **MINEBEA Co., Ltd.**
**Kitasaku-gun, Nagano-ken (JP)**

(72) Erfinder:
• **Lelkes, Andras**
**70499 Stuttgart (DE)**
• **Bufe, Michael**
**78589 Dürbheim (DE)**

(74) Vertreter: **Riebling, Peter**
**Patentanwalt**
**Postfach 31 60**
**88113 Lindau (DE)**

(54) **Verfahren zur Ansteuerung eines bürstenlosen Elektromotors**

(57) Die Erfindung betrifft ein Verfahren zur Ansteuerung eines bürstenlosen Elektromotors für den Betrieb innerhalb eines vorgegebenen Versorgungsspannungsbereichs, wobei eine Motorsteuerung die Wicklungsspannung mittels Pulsweitenmodulation (PWM) steuert und die Drehzahl auf eine vorgegebene Drehzahl regelt. Der Motor ist erfindungsgemäß so dimensioniert, dass die nominale Drehzahl im nominalen Arbeitspunkt bei der nominalen Versorgungsspannung und maximalem PWM-Verhältnis gerade erreicht wird.

Fig. 3

**Beschreibung**

Gebiet der Erfindung

Die Erfindung betrifft ein Verfahren zur Ansteuerung eines bürstenlosen Elektromotors nach dem Oberbegriff des Patentanspruchs 1.

Stand der Technik

Es sind bürstenlose Gleichstrommotoren für Lüfteranwendungen bekannt, die mit oder ohne eine Drehzahlregelung (closed-loop control) arbeiten.

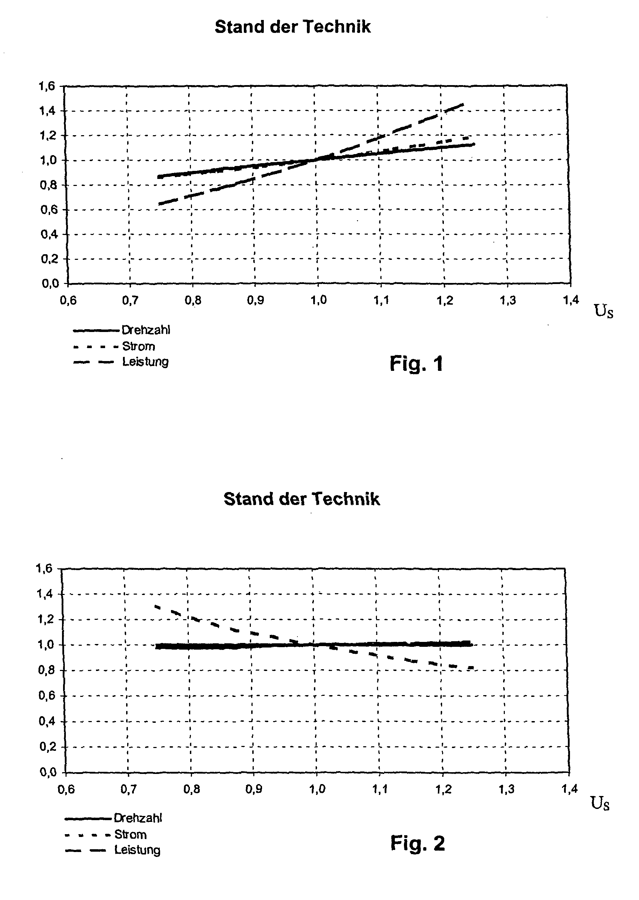

Die Drehzahl eines bürstenlosen Gleichstrommotors ohne Drehzahlregelung ist abhängig von der Versorgungsspannung (siehe Figur 1). Je höher die Versorgungsspannung ist, desto höher ist die Drehzahl des Motors. Bei einigen Anwendungen, zum Beispiel in Fahrzeugen, werden Lüftermotoren mit einer nominalen Versorgungsspannung von 12 V verwendet. Die Bordspannung der Fahrzeuge kann aber in einem Bereich von 8 V bis 18 V variieren, so dass auch die Drehzahl des Motors erheblich schwanken kann. Bei Lüfteranwendungen steigt die abgegebene mechanische Leistung etwa mit der dritten Potenz der Drehzahl. Mit wachsender Versorgungsspannung wächst die Drehzahl des ungeregelten Motors. Damit wächst auch die Motorbelastung und daher kann bei einer zu hohen Versorgungsspannung leicht eine thermische Überbelastung des Motors auftreten.

Wenn andere Parameter und Umwelteinflüsse vernachlässigt werden, zeigt die untere Tabelle, wie sich die Drehzahländerung, hervorgerufen durch eine Erhöhung der Versorgungsspannung, eines ungeregelten Elektromotors, der als Lüftermotor eingesetzt wird, auf andere Motor- bzw. Lüfterparameter auswirkt:

| Drehzahl | Motorabgabeleistung | Luftvolumen | Statische Druckerhöhung | Lüftergeräusch |
|---|---|---|---|---|
| + 10% | + 33% | + 10% | + 21 % | + 2,3dB(A) |
| + 20% | + 73% | + 20% | + 44% | + 4,4 dB(A) |
| + 30% | + 120% | + 30% | + 69% | + 6,3 dB(A) |

Bei höheren Drehzahlen liefert also der Lüfter mehr Luft, die jedoch vom Nutzer normalerweise nicht benötigt wird, da der Lüfter so ausgelegt ist, dass er im gesamten Versorgungsspannungsbereich eine ausreichende Luftmenge liefert. Zusätzlich wächst jedoch mit höherer Drehzahl sowohl die Belastung des Motors als auch das Geräusch des Lüfters. Die höhere Belastung bedeutet nicht nur einen höheren Energieverbrauch, sondern auch eine höhere Eigenerwärmung des Motors, die wiederum die Lebensdauer des Lagersystems negativ beeinflusst.

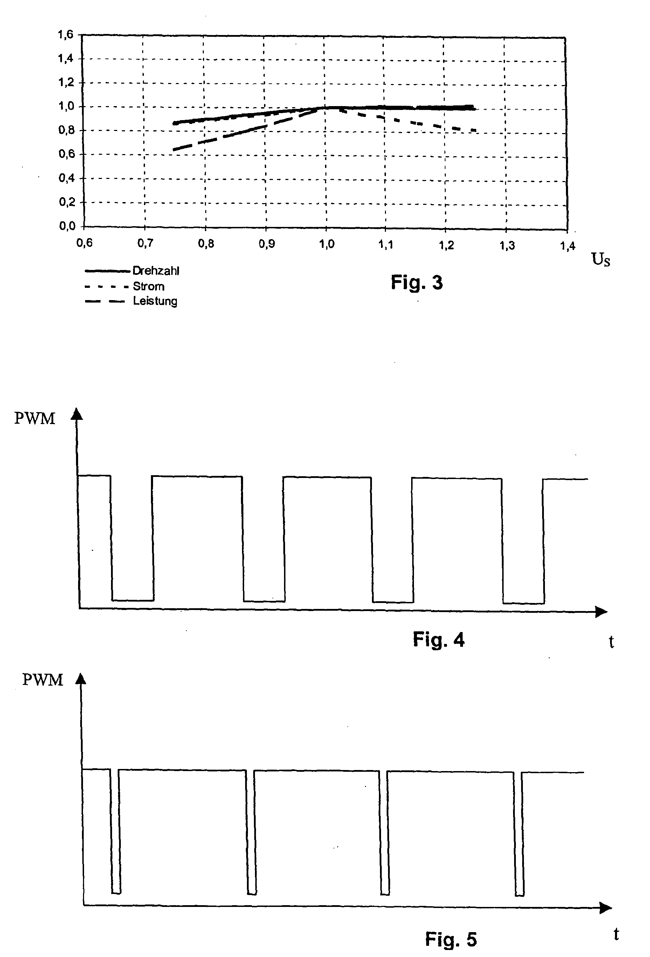

Bei Motoren mit Drehzahlregelung bleibt die Ausgangsleistung konstant (Figur 2). Daher führt eine Verringerung der Versorgungsspannung zu einer höheren Stromaufnahme, so dass insbesondere die Leistungselektronik für diese Ströme ausgelegt sein muss. Bei einem Motor mit aktiver Drehzahlregelung bleiben Drehzahl, Motorabgabeleistung, Luftvolumen, Druckerhöhung und das Lüftergeräusch unabhängig von der Versorgungsspannung konstant. In diesem Fall wird der Motor so dimensioniert, dass er auch bei minimaler noch erlaubter Versorgungsspannung die maximal gewünschte Drehzahl auch bei maximaler Belastung erreichen kann. Probleme können jedoch bei Motoren mit integrierter Kommutierungselektronik entstehen, da die Leistungselektronik auch bei reduzierter Versorgungsspannung konstante Leistung liefern muss und daher höhere Ströme aufnimmt, wie die folgende Tabelle zeigt:

| Versorgungsspannung | Eingangsstrom |
|---|---|
| - 10% | + 11% |
| - 20% | + 25% |
| - 30% | + 43% |

Wenn in dem oberen Beispiel die Spannung vom Nominalwert 12 V auf 8,4 V sinkt (-30%), wächst der Eingangsstrom der Leistungselektronik um ca. 43%. Dementsprechend stark wächst auch die Verlustleistung, das heißt die thermische Belastung der Leistungshalbleiter der Kommutierungselektronik.

Eine Möglichkeit zur Vermeidung dieses Problems besteht darin, zusätzlich zur Drehzahlregelung die Versorgungsspannung durch die Motorsteuerung zu erfassen und eine entsprechende Anpassung des PWM-Verhältnisses vorzunehmen. Dadurch erhöhen sich aber die Kosten für die Sensorik. Eine solche Lösung kommt daher für Low-Cost-Motoren aus Kostengründen oftmals nicht in Frage.

Die Aufgabe der Erfindung ist es, ein Verfahren zur Ansteuerung eines bürstenlosen Elektromotors vorzuschlagen, bei dem weder bei reduzierter noch bei erhöhter Betriebsspannung eine erhöhte Belastung der Motorkomponenten entsteht.

Diese Aufgabe wird erfindungsgemäß durch die Merkmale des Patentanspruch 1 gelöst. Ein bürstenloser Motor nach der Erfindung ist in Anspruch 3 angegeben.

Grundlage der Lösung ist ein drehzahlgeregelter Motor, wobei jedoch auf eine Regelreserve im Unterspannungsbereich gemäß dem Stand der Technik verzichtet wird.

Als Anwendung für den erfindungsgemäßen Elektromotor kommen beispielsweise neben Anwendungen als Pumpenmotoren insbesondere auch Lüftermotoren in Frage.

Erfindungsgemäß wird eine vorzugsweise auf Pulsweitenmodulation (PWM) basierende Motorsteuerung verwendet, die mit einer Drehzahlregelung arbeitet und so dimensioniert ist, dass der Motor seine vorgegebene nominale Drehzahl bei nominaler Belastung bei der nominalen Versorgungsspannung gerade erreicht. Steigt in diesem Fall die Versorgungsspannung über den nominalen Wert, so verhindert die Regelung eine Erhöhung der Drehzahl.

Sinkt die Versorgungsspannung unter die nominale Spannung bei voller Motorbelastung, erreicht die Regelung schnell das maximale PWM-Verhältnis. Ab diesem Punkt kann das PWM-Verhältnis nicht weiter erhöht werden, weshalb auch der Eingangsstrom nicht weiter ansteigen kann. Statt dessen dreht sich der Motor durch die reduzierte Spannung bei dadurch ebenfalls zurückgehender Stromaufnahme langsamer und es reduziert sich auch die Motorbelastung (Verlustleistung).

Nachfolgend wird ein Ausführungsbeispiel der Erfindung im Vergleich zum Stand der Technik anhand der Zeichnungen näher beschrieben.

Kurzbeschreibung der Zeichnungen:

Figur 1 ist eine Darstellung der relativen Drehzahl, des Motorstroms und der Aufnahmeleistung eines bürstenlosen Lüfterantriebes ohne Drehzahlregelung (Stand der Technik), in Abhängigkeit der relativen Versorgungsspannung.

Figur 2 ist eine Darstellung der relativen Drehzahl, des Motorstrom und der Aufnahmeleistung eines bürstenlosen Lüfterantriebes mit Drehzahlregelung (Stand der Technik), in Abhängigkeit der relativen Versorgungsspannung.

Figur 3 ist eine Darstellung der relativen Drehzahl, des Motorstroms und der Aufnahmeleistung eines bürstenlosen Lüfterantriebes mit Drehzahlregelung gemäß der Erfindung in Abhängigkeit der relativen Versorgungsspannung.

Figur 4 zeigt beispielhaft den Verlauf des PWM-Steuersignals bei einer Versorgungsspannung, die deutlich höher ist als die nominale Versorgungsspannung des Lüfterantriebs.

Figur 5 zeigt beispielhaft den Verlauf des PWM-Steuersignals bei nominaler Versorgungsspannung.

Beschreibung eines Ausführungsbeispiels der Erfindung

In den Figuren 1 bis 3 ist die Drehzahl als durchgezogene Linie, der Strom als enge Strichlinie und die Leistung als weite Strichlinie über der Spannung dargestellt. Es wurde jeweils auf Nenndrehzahl, Nennstrom und Nennleistung sowie auf Nennspannung normiert.

Figur 1 zeigt eine Darstellung von relativer Drehzahl, Motorstrom und Aufnahmeleistung (Nominalwert = 1,0) eines bürstenlosen Lüfterantriebes ohne Drehzahlregelung nach dem Stand der Technik, in Abhängigkeit der relativen Versorgungsspannung (Nominalwert = 1,0). Man erkennt, dass alle Werte sich mit steigender Versorgungsspannung etwa linear erhöhen.

Die Folge ist ein höherer Energieverbrauch, höhere Verluste im Motor und in der Kommutierungselektronik sowie ein erhöhtes Strömungsgeräusch, insbesondere wenn die Versorgungsspannung höher ist als die Nominalspannung (1,0).

Figur 2 zeigt eine Darstellung von relativer Drehzahl, Motorstrom und Aufnahmeleistung eines bürstenlosen Lüfterantriebes mit Drehzahlregelung nach dem Stand der Technik, in Abhängigkeit der relativen Versorgungsspannung. Auch bei Versorgungsspannungen, die von der Nominalspannung abweichen, bleiben Drehzahl und Aufnahmeleistung aufgrund der Drehzahlbegrenzung konstant.

Bei niederen Versorgungsspannungen unterhalb der Nominalspannung (=1,0) erhöht sich der Motorstrom. Die Folge ist eine höhere Strombelastung für die Kommutierungselektronik und für die Zuleitungen.

Figur 3 zeigt die Kennlinien eines erfindungsgemäßen Lüfterantriebs. Zur Ansteuerung des Elektromotors wird eine Motorsteuerung verwendet, die den Motorstrom mittels Pulsweitenmodulation (PWM) steuert und die Drehzahl auf eine festgelegte maximale Drehzahl begrenzt. Wichtig ist, dass der Motor beziehungsweise die Motorsteuerung so dimensioniert ist, dass die nominale Drehzahl bei nominaler Belastung bei der nominalen Versorgungsspannung gerade erreicht wird, wobei das maximale Tastverhältnis nahezu erreicht ist.

Die Darstellung der relativen Drehzahl, des Motorstroms und der Aufnahmeleistung eines erfindungsgemäßen Motors in Abhängigkeit der relativen Versorgungsspannung gemäß Figur 3 zeigt, dass bei Versorgungsspannungen größer als die Nominalspannung Drehzahl und Aufnahmeleistung aufgrund der Drehzahlbegrenzung konstant bleiben.

Dabei nimmt der Motorstrom ab und bleibt unkritisch. Bei Versorgungsspannungen kleiner als die Nominalspannung nehmen Drehzahl und Aufnahmeleistung ab, da der Motorstrom aufgrund des bereits bei seiner Nennspannung erreichten maximalen PWM-Verhältnisses nicht erhöht werden kann.

Aus Figur 3 erkennt man auch, dass der Motorstrom im nominalen Arbeitspunkt (Position 1,0 / 1,0) sein Maximum erreicht.

Figur 4 zeigt schematisch das PWM-Steuersignal bei einer Versorgungsspannung deutlich oberhalb der nominalen Versorgungsspannung.

Reduziert man die Versorgungsspannung, so erhöht der Drehzahlregler das PWM-Verhältnis.

Die Figur 5 zeigt schematisch das PWM-Steuersignal bei einer geringfügig größeren Versorgungsspannung als die nominale Versorgungsspannung. Sinkt die Versorgungsspannung weiter ab, so kann das Tastverhältnis nicht mehr oder kaum noch erhöht werden.

Die erfindungsgemäße Dimensionierung kann man in vielen Fällen mit einer entsprechenden Wicklungsauslegung verwirklichen. Das heißt, der magnetische Kreis und die Kommutierungselektronik müssen nicht geändert werden. Ein möglicher Weg, die erfindungsgemäße Wicklungsauslegung auszugestalten, sieht folgendermaßen aus:

Beispielsweise werde ein Lüfter mit einem Mustermotor mit bekannter Wicklungsauslegung (Drahtdurchmesser $d_0$, Windungszahl pro Zahn $N_0$) untersucht. Der Lüfter kann entweder in die tatsächliche Applikation eingebaut werden, oder in eine Prüfvorrichtung, die eine ähnliche strömungstechnische Widerstandskennlinie aufweist wie die tatsächliche Applikation. In diesem Fall erreicht man bei der nominalen Drehzahl den nominalen Arbeitspunkt (Luftmenge und Druck). Experimentell kann diejenige Versorgungsspannung festgestellt werden, bei welcher der Motor gerade noch diese nominale Drehzahl erreicht. Wenn diese Grenzwert $U_{Grenze}$ bekannt ist und die nominale Versorgungsspannung $U_{Nenn}$ ist, dann kann die erfindungsgemäße Wicklung einfach berechnet werden durch:

Drahtdurchmesser:

$$d = d_0 \sqrt{\frac{U_{Grenze}}{U_{Nenn}}}$$

Windungszahl:

$$N = N_0 \frac{U_{Nenn}}{U_{Grenze}}$$

## Bezugszeichenliste

| | |
|---|---|
| $U_s$ | Versorgungsspannung |
| t | Zeit |
| PWM | Pulsweitenmodulation |
| $U_{Nenn}$ | Nominale Versorgungsspannung |
| $U_{Grenze}$ | Grenzspannung |
| N, No | Windungszahl |
| d, $d_0$ | Drahtdurchmesser |

## Patentansprüche

1. Verfahren zur Ansteuerung eines bürstenlosen Elektromotors für den Betrieb innerhalb eines vorgegebenen Versorgungsspannungsbereichs, wobei eine Motorsteuerung die Wicklungsspannung mittels Pulsweitenmodulation (PWM) steuert und die Drehzahl auf einen vorgegebenen Sollwert regelt, **dadurch gekennzeichnet, dass** der Motor so dimensioniert ist, dass die nominale Drehzahl im nominalen Arbeitspunkt bei der nominalen Versorgungsspannung und bei maximalem PWM-Verhältnis erreicht wird.

**2.** Verfahren nach Anspruch 1, **dadurch gekennzeichnet, dass** die Drehzahl aus dem Kommutierungssignal abgeleitet wird.

**3.** Verfahren nach Anspruch 1 oder 2, **dadurch gekennzeichnet, dass** die Motordimensionierung durch eine entsprechende Auswahl der Wickeldrahtdurchmesser und der Windungszahl realisiert wird.

**4.** Bürstenloser Elektromotor für den Betrieb innerhalb eines vorgegebenen Versorgungsspannungsbereichs, wobei eine Motorsteuerung vorgesehen ist, die die Wicklungsspannung mittels Pulsweitenmodulation (PWM) steuert und die Drehzahl auf eine festgelegte maximale Drehzahl regelt,
**dadurch gekennzeichnet,**
**dass** der Motor so dimensioniert ist, dass die nominale Drehzahl im nominalen Arbeitspunkt bei der nominalen Versorgungsspannung und bei maximalem PWM-Verhältnis gerade erreicht wird.

**5.** Bürstenloser Elektromotor nach Anspruch 4, **dadurch gekennzeichnet, dass** die Motordimensionierung durch eine entsprechende Auswahl der Wickeldrahtdurchmesser und der Windungszahl realisiert wird.

**6.** Bürstenloser Elektromotor nach einem der Ansprüche 4 oder 5, **dadurch gekennzeichnet, dass** die elektronische Kommutierung und die Drehzahlregelung mittels eines Mikrocontrollers vorgenommen wird.

**7.** Bürstenloser Elektromotor nach einem der vorangehenden Ansprüche 4 bis 6, **dadurch gekennzeichnet, dass** der Elektromotor ein Lüftermotor ist.

## Stand der Technik

**Fig. 1**

## Stand der Technik

**Fig. 2**

Fig. 3

Drehzahl
Strom
Leistung

Fig. 4

Fig. 5

**EP 1 589 652 A1**

| Europäisches Patentamt | **EUROPÄISCHER RECHERCHENBERICHT** | Nummer der Anmeldung EP 05 00 7611 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 383 232 A (ROBERT BOSCH GMBH) 21. Januar 2004 (2004-01-21) * Absätze [0001], [0013], [0018]; Abbildungen 1,2 * | 1,4 | H02P6/08 H02P6/16 H02P6/18 |
| X | * Absätze [0001], [0018]; Abbildungen 1,2 * | 2,3,5-7 | |
| | ----- | | |
| A | US 5 563 980 A (CHEN ET AL) 8. Oktober 1996 (1996-10-08) * Spalte 3, Zeilen 10-42; Abbildungen 1-3 * | 1-7 | |
| | ----- | | |
| A | EP 0 899 862 A (BARBER COLMAN) 3. März 1999 (1999-03-03) * Abbildungen 1,2,8 * | 2,6 | |
| | ----- | | |
| A | EP 0 802 613 A (PM DM PRECISION MOTORS DEUTSCHE MINEBEA GMBH) 22. Oktober 1997 (1997-10-22) * Spalte 1, Zeilen 36-40; Abbildungen 1-3 * | 3,5 | |
| | ----- | | RECHERCHIERTE SACHGEBIETE (Int.Cl.7) H02P |

Der vorliegende Recherchenbericht wurde für alle Patentansprüche erstellt

| Recherchenort München | Abschlußdatum der Recherche 9. August 2005 | Prüfer Kanelis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 00 7611

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1383232 | A | 21-01-2004 | DE | 10232166 A1 | 05-02-2004 |
| | | | EP | 1383232 A2 | 21-01-2004 |
| | | | JP | 2004056998 A | 19-02-2004 |
| US 5563980 | A | 08-10-1996 | KEINE | | |
| EP 0899862 | A | 03-03-1999 | US | 5872434 A | 16-02-1999 |
| | | | EP | 0899862 A2 | 03-03-1999 |
| EP 0802613 | A | 22-10-1997 | DE | 19614755 A1 | 23-10-1997 |
| | | | EP | 0802613 A2 | 22-10-1997 |

EPO FORM P0461

Für nähere Einzelheiten zu diesem Anhang : siehe Amtsblatt des Europäischen Patentamts, Nr.12/82